Europäisches Patentamt

European Patent Office

Office européen des brevets

(11) Veröffentlichungsnummer: **0 447 583 A1**

# EUROPÄISCHE PATENTANMELDUNG

(21) Anmeldenummer: 90105270.4

(22) Anmeldetag: 20.03.90

(51) Int. Cl.5: **B23K 9/12**, G05D 13/62

(43) Veröffentlichungstag der Anmeldung:
25.09.91 Patentblatt 91/39

(84) Benannte Vertragsstaaten:
**AT DE FR GB SE**

(71) Anmelder: **N I S pri VMEI " LENIN"**
**Studentsko Gradche "Hr. Botev"**
**Sofia(BG)**

(72) Erfinder: **Georgiev, Bojan Georgiev, Dipl.-Ing.**
**Baba Iliiza Ul. 42, Bl.2-2**
**Sofia-1612(BG)**
Erfinder: **Daskalov, Zivko Assenov, Dipl.-Ing.**
**Oborishte Ul. 93**
**Sofia 1505(BG)**
Erfinder: **Zvetkova, Svetlana Atanassova,**
**Dipl.-Ing.**
**Komplex Druzba, Bl. 119-2**
**Sofia 1592(BG)**
Erfinder: **Dachev, Bogomil Davidov, Dipl.-Ing.**
**Boul. Hr. Botev 11**
**Sofia 1000(BG)**
Erfinder: **Yordanov, Jurii Valchev**
**Boul. V.Ivanov, Bl. 146-7**
**Sofia 1309(BG)**
Erfinder: **Hranov, Lyudmil Ivanov**
**Don Ul. 12**
**Sofia 1614(BG)**

(74) Vertreter: **Ebbinghaus, Dieter et al**
**Patentanwälte v. Füner, Ebbinghaus, Finck**
**Mariahilfplatz 2 & 3**
**W-8000 München 90(DE)**

(54) **Vorrichtung zum Zuführen von Elektrodendraht.**

(57) Eine Vorrichtung zum Zuführen von Elektrodendraht besteht aus hintereinander angeordneten und miteinander verbundenen Moduln, von denen einer einen Hauptmodul 1 und die übrigen Submoduln 2', 2" bilden. Jeder Modul weist einen Antriebsmechanismus 3 auf, der von einem Gleichstrommotor 4 angetrieben wird. Mit dem Gleichstrommotor in Reihe ist ein elektronischer Schalter 5 geschaltet. Der elektronische Schalter 5 des Hauptmoduls 1 wird über einen Impuls-Drehzahl- oder -Geschwindigkeitsregler 6 gesteuert. Jeder Submodul 2', 2" enthält einen Impulsformer 7, dessen Ausgang mit dem Steuereingang des elektronischen Schalters 5 desselben Moduls und mit dem Eingang des Impulsformers des ersten Submoduls in Verbindung steht.

Die Impulsformer sind in zwei Varianten, mit einem oder zwei in Reihe geschalteten monostabilen Multivibratoren 9, 9' ausgeführt.

Mit der erfindungsgemäßen Vorrichtung können unterschiedliche Arten von Elektrodendraht über große Entfernungen bei vermindertem Gleiten und minimaler Deformation zugeführt werden.

Fig.1

Die Erfindung bezieht sich auf eine Vorrichtung zum Zuführen von Elektrodendraht zur Anwendung beim halbautomatischen und mechanisierten Schweißen, insbesondere zur Zufuhr von Rohr- und Aluminium-Elektrodendraht über große Entfernungen.

Aus der BG-A-29 025 ist bereits eine Vorrichtung zum Zuführen von Elektrodendraht bekannt, die aus aufeinanderfolgend miteinander verbundenen Moduln aufgebaut ist, von denen einer der Hauptmodul und die übrigen Submoduln sind. Die Moduln weisen je einen von einem Gleichstrommotor angetriebenen Antriebs- oder Schubmechanismus auf. Mit dem Gleichstrommotor ist jeweils ein Thyristorschalter in Reihe geschlossen, wobei der Thyristorschalter des Hauptmoduls von einem Impuls-Geschwindigkeitsregler gesteuert wird. Die Thyristorschalter der Submoduln werden unmittelbar über den Geschwindigkeits- oder Drehzahlregler des Hauptmoduls gesteuert.

Bei der bekannten Vorrichtung wird der Draht zwischen den einzelnen Moduln ungleichmäßig gespannt, die Betriebsbedingungen des Motors und des Geschwindigkeitsreglers des Hauptmoduls sind kompliziert. Gleichzeitig werden die Motoren der Submoduln unvollständig belastet, weil diesen Spannungen zugeführt werden, deren Mittelwert kleiner oder im besten Fall gleich dem des Motors des Hauptmoduls ist. Die bekannte Vorrichtung hat daher einen verhältnismäßig schlechten Wirkungsgrad. Dabei ist der Hauptmodul dem Schweißplatz am nächsten angeordnet, d.h., das wichtigste, komplizierteste und am meisten beanspruchte Element der Anordnung ist maximal schädlichen Einwirkungen ausgesetzt. Der Aufbau der bekannten Vorrichtung erschwert auch das Beladen mit Elektrodendraht.

Aus der BG-A-31 835 ist eine Vorrichtung zum Zuführen von Elektrodendraht bekannt, die ebenfalls aus einem Haupt- und aus Submoduln besteht, die miteinander in Reihe geschaltet sind und je einen von einem Gleichstrommotor angetriebenen Schub- oder Antriebsmechanismus aufweisen. Mit dem Motor des Hauptmoduls ist ein von einem Geschwindigkeits- oder Drehzahlregler gesteuerter Thyristorschalter in Reihe geschaltet. Die Motoren der Submoduln stehen parallel über öffnende Dioden mit dem Thyristorschalter des Hauptmoduls in Verbindung.

Bei dieser bekannten Vorrichtung zum Zuführen von Elektrodendraht wird der Draht ungleichmäßig gespannt und es können zwischen den einzelnen Moduln sogenannte Drahtschlaufen oder -ösen entstehen. Die Motoren der Submoduln werden ungleichmäßig ausgenutzt; der Thyristor-Gleichrichter des Geschwindigkeitsreglers muß leistungsmäßig auf die maximal mögliche Anzahl der in der Vorrichtung vorzusehenden Submoduln ausgelegt werden.

Ein gemeinsamer Nachteil beider bekannter Vorrichtungen zum Zuführen von Elektrodendraht ist die ungleichmäßige Teilnahme der einzelnen Moduln an der Arbeit des Systems und insbesondere eine hohe Belastung des Hauptmoduls, an dem es zu einem Gleiten und damit zu einer Deformation des Drahtes kommen kann, durch die die Zufuhr weicher Elektrodendrähte auf große Entfernungen erschwert wird. Kennzeichnend für beide bekannte Vorrichtungen ist das ungleichmäßige Spannen des Drahtes zwischen den einzelnen Moduln, weil wegen des unterschiedlichen Widerstandes der Verbindungsschläuche die Belastung der einzelnen Moduln unterschiedlich ist, während ihre Motoren bestenfalls eine Speisespannung in Form von Impulsen erhalten, die nach der Form, Dauer und Zeit mit den Impulsen übereinstimmen, die den Motor des Hauptmoduls steuern.

Der Erfindung liegt die Aufgabe zugrunde, eine Vorrichtung zum Zuführen von Elektrodendraht zu schaffen, die eine Verminderung des Gleitens, der Drahtdeformationen und der Bildung sogenannter Schlaufen oder Ösen zwischen den einzelnen Moduln oder am Eingang des Schweißschlauches, einen erhöhten Wirkungsgrad des ganzen Systems und die Möglichkeit zum Zuführen weicher Elektrodendrähte auf große Entfernungen gewährleistet.

Diese Aufgabe wird erfindungsgemäß durch eine Vorrichtung zum Zuführen von Elektrodendraht gelöst, die aus in Reihe miteinander verbundenen Moduln aufgebaut ist, von denen einer den Haupt- und die anderen die Submoduln bilden. Die Moduln weisen je einen von einem Gleichstrommotor angetriebenen Antriebs- oder Schubmechanismus auf, wobei mit den Gleichstrommotoren der Moduln je ein elektronischer Schalter in Reihe geschaltet ist. Die Vorrichtung ist dadurch gekennzeichnet, daß der elektronische Schalter des Hauptmoduls von einem Impuls-Geschwindigkeits- oder -Drehzahlregler gesteuert wird, während jeder Submodul einen Impulsformer enthält, dessen Ausgang mit dem Steuereingang des elektronischen Schalters desselben Moduls und mit dem Eingang des Impulsformers des ersten Submoduls in Verbindung steht.

Mit Hilfe der erfindungsgemäßen Vorrichtung können Elektrodendrähte unterschiedlicher Art (z.B. massive und rohrförmige Drähte) über große Entfernungen bei vermindertem Gleiten und minimaler Deformation zugeführt werden, weil der Draht zwischen den einzelnen Moduln ständig gespannt ist. Ein wesentlicher Vorteil ist auch die erhöhte Effektivität der mechanischen und elektrischen Elemente, weil die Leistungsfähigkeit der Motoren der Submoduln vollständig ausgenutzt wird. Das Fehlen von Drehzahlreglern für die Motoren der Submoduln und die verbesserten Arbeitsverhältnisse sowohl des Motors als auch des Impuls-Geschwindigkeitsreglers des Hauptmoduls gewährleisten eine hohe Standfestigkeit und Zuverlässigkeit der Arbeit des derart aufgebauten Modul-Drahtzufuhrsystems. Weitere Vorteile der erfindungsgemäßen Vorrichtung sind ihre vereinfachte und eine geringe Masse aufweisende Konstruktion, da Motoren mit geringerer Leistung verwendet werden und die Möglichkeit, die Anzahl der Moduln und ihre gegenseitige Anordnung wunschgemäß zu gestalten und zu bestimmen.

Im folgenden werden Ausführungsbeispiele der erfindungsgemäßen Vorrichtung zum Zuführen von Elektrodendraht anhand der Zeichnung erläutert. Es zeigen:

Fig. 1　ein Struktur-Schaltbild der Vorrichtung zum Zuführen von Elektrodendraht,

Fig. 2　das Schaltbild einer ersten Ausführungsform des Impulsformers,

Fig. 3　in einem Zeitdiagramm die Signale des Impulsformers der Figur 2,

Fig. 4　das Schaltbild einer zweiten Ausführungsform des Impulsformers und

Fig. 5　in einem Zeitdiagramm die Signale des Impulsformers der Figur 4.

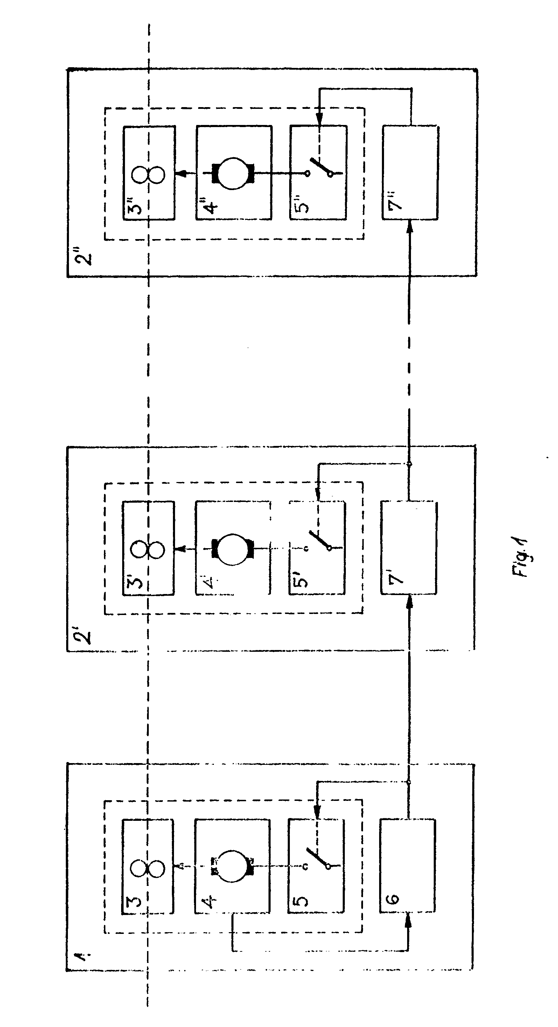

Die in Figur 1 gezeigte Vorrichtung zum Zuführen von Elektrodendraht besteht aus einem Hauptmodul 1 und mit ihm in Reihe verbundenen Submoduln 2', 2'',....Der Hauptmodul 1 und die Submoduln 2', 2'' weisen je einen Stoß- oder Antriebsmechanismus 3, 3', 3'' auf, die je von einem Gleichstrommotor 4, 4', bzw. 4'' angetrieben werden. Mit den Gleichstrommotoren 4, 4', 4'' ist je ein elektronischer Schalter 5, 5' bzw. 5'' in Reihe geschaltet. Der elektronische Schalter 5 des Hauptmoduls 1 wird über einen Impuls-Drehzahlregler 6 gesteuert, während die Gleichstrommotoren 4', 4'' der Submoduln 2', 2'' mittels Impulsformern 7' bzw. 7'' gesteuert werden.

Der in Figur 2 gezeigte Impulsformer 7a besteht aus einem Impulssummierer 8, dessen erstem und zweitem Eingang das Eingangs-Impulssignal $U_{eing.}$ direkt bzw. über einen monostabilen Multivibrator 9 zugeführt wird.

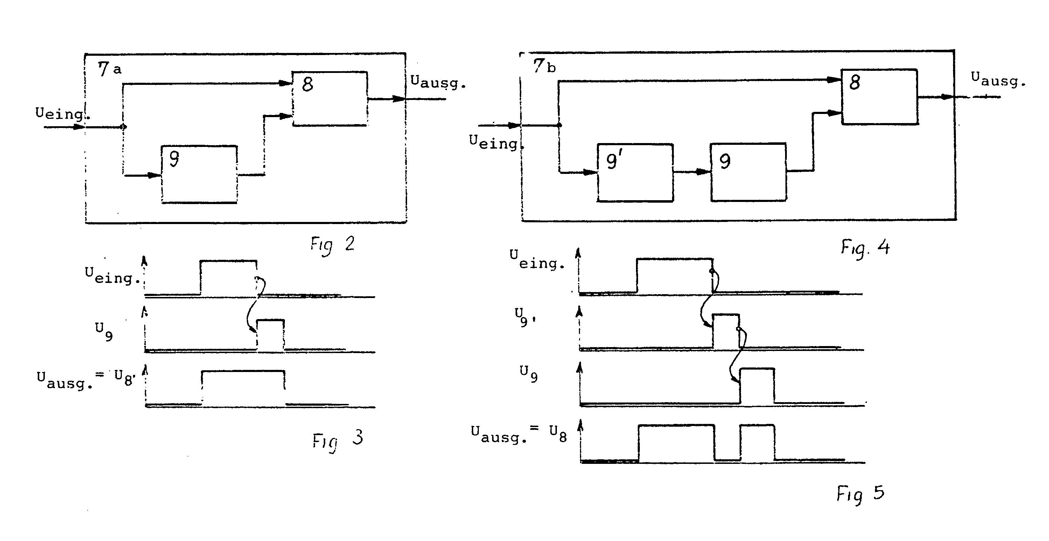

Bei dem in Figur 4 gezeigten Impulsformer 7b ist zwischen den Eingang des Impuls-Eingangssignals $U_{eing.}$ und den Eingang des monostabilen Multivibrators 9 ein weiterer monostabiler Multivibrator 9' geschaltet.

Die Vorrichtung zum Zuführen von Elektrodendraht arbeitet folgendermaßen:

Die Geschwindigkeit der Verschiebung des Elektrodendrahts durch den Antriebsmechanismus 3 des Hauptmoduls 1 wird von der Dauer des Steuerimpulses bestimmt, der am Ausgang des Drehzahlreglers 6 erzeugt wird. Dieser bestimmt über den elektronischen Schalter 5 den Durchschnittswert der Ankerspannung des Gleichstrommotors 4 des Hauptmoduls 1. Den elektronischen Schaltern 5' und 5'' der Gleichstrommotoren 4' bzw. 4'' der Submoduln 2' bzw. 2'' werden von den Ausgängen der Impulsformer 7', 7'' Steuerimpulse mit einem Durchschnittswert zugeführt, der größer ist als der der Impulse des Impuls-Drehzahlreglers 6. Da die Antriebsmechanismen 3, 3' und 3'' der einzelnen Moduln durch den Elektrodendraht mechanisch miteinander verbunden sind, ist die Geschwindigkeit bzw. Drehzahl ihrer Motoren gleich. Demzufolge arbeitet der Motor 4 des Hauptmoduls 1 im Vergleich zu den Motoren 4', 4'' des Submoduln 2', 2'' in einer erleichterten Betriebsweise, wobei der Elektrodendraht mit konstanter Zugspannung zwischen den vorhandenen Moduln zugeführt wird.

Die Vorrichtung arbeitet folgendermaßen:

Bei der Ausführungsform der Figur 2 erhält der elektronische Schalter 5' des Submoduls 2' Steuerimpulse $U_{ausg.} = U_8$ mit einer Frequenz, die gleich ist der der Impulse vom Drehzahlregler 6 des Hauptmoduls 1, jedoch mit einer größeren Dauer, die gleich ist der Summe der Dauer des Eingangsimpulses $U_{eing.}$ und der Dauer des Impulses $U_9$, der vom Multivibrator 9 erzeugt wird. Somit erhält der Motor 4' des Submoduls 2' eine Impuls-Speisespannung, deren Durchschnittswert größer ist als der der Speisespannung des Motors 4 des Hauptmoduls 1. Da die Drehzahlen der beiden Motoren wegen der durch den Elektrodendraht zustandekommenden mechanischen Verbindung zwischen den Moduln ungefähr gleich sind, ist die Belastung des Motors des Submoduls größer als die des Motors 4 des Hauptmoduls 1. Da das Ausgangssignal des Impulsformers 7' des Submoduls 2' gleichzeitig auch Eingangssignal für den Impulsformer 7'' des nächsten Submoduls 2'' ist, wird dem Motor 4'' über den elektronischen Schalter 5'' eine Speisespannung zugeführt, deren Durchschnittswert größer ist als der der Speisespannung des Motors 4' des vorhergehenden Submoduls 2'.

Somit wird bei aufeinanderfolgender Verbindung des Hauptmoduls und des oder der Submoduln der Elektrodendraht mit konstanter Zugspannung zwischen allen Moduln bewegt, deren Wert durch eine Änderung der Dauer der Impulse $U_9$ der Multivibratoren 9 verändert werden kann.

Bei dem in Figur 4 gezeigten Ausführungsbeispiel des Impulsformers 7b erhält der Motor 4' des Submoduls 2' eine Impuls-Speisespannung, deren Durchschnittswert größer ist als der der Speisespannung des Motors 4 des Hauptmoduls 1, wobei, unterschiedlich vom vorstehend dargelegten Fall, diese Erhöhung einem zusätzlichen Impuls zuzuschreiben ist, dessen Dauer vom monostabilen Multivibrator 9 bestimmt wird. Dieser folgt dem Eingangsimpuls nach einer bestimmten Zeit $t_n$, deren Dauer vom monostabilen Multivibrator 9' bestimmt wird. Kennzeichnend ist, daß der Motor 4' des Submoduls 2', der dem Hauptmodul 1 unmittelbar folgt, eine Impuls-Speisespannung nicht nur mit einem größeren Durchschnittswert erhält, sondern auch mit einer im Vergleich zu der dem Motor 4 des Hauptmoduls 1 zugeführten verdoppelten Frequenz. Da das Ausgangssignal des Impulsformers 7' des Submoduls 2' Eingangssignal auch für den Impulsformer 7'' des nächsten Submoduls 2'' ist, wird dem Motor 4'' über den elektronischen Schalter 5'' eine Speisespannung zugeführt, deren Durchschnittswert größer ist und deren Frequenz im Vergleich zu der dem Motor 4' des vorhergehenden Moduls 2' usw. zugeführten Speisespannung verdoppelt ist.

In den beiden angeführten Fällen wird bei aufeinanderfolgender Verbindung eines oder mehrerer Submoduln mit dem Hauptmodul der Elektrodendraht mit einer bestimmten Zugspannung zwischen den Moduln zugeführt, wodurch die Qualität der Drahtzuführung verbessert wird.

**Patentansprüche**

1. Vorrichtung zum Zuführen von Elektrodendraht mit einem Hauptmodul (1) und einem oder mehreren Submoduln (2', 2''), wobei der Hauptmodul und der oder die Submoduln hintereinander miteinander in Verbindung stehen, wobei jeder Modul einen von einem Gleichstrommotor (4, 4', 4'') angetriebenen Antrieb (3, 3', 3'') aufweist und mit den Gleichstrommotoren je ein elektronischer Schalter (5, 5', 5'') in Reihe geschaltet ist, der von einem Impuls-Drehzahlregler (6, 7', 7'') gesteuert ist, dadurch **gekennzeichnet,** daß jeder Submodul (2', 2'') einen Impulsregler (7', 7'') enthält, dessen Ausgang mit dem Steuereingang des elektronischen Schalters (5', 5'') und mit dem Eingang des Impulsformers (7'') des nächsten Moduls (2'') in Verbindung steht, und daß der Ausgang des Drehzahlreglers (6) des Hauptmoduls (1) an den Eingang des Impulsformers (7') des ersten Submoduls (2') angeschlossen ist.

2. Vorrichtung nach Anspruch 1, dadurch **gekennzeichnet,** daß der Impulsformer (7a) jedes Submoduls aus einem Impulssummierer (8) und einem monostabilen Multivibrator (9) besteht, wobei der Eingang des Impulsreglers (7a) mit dem Eingang des Impulssummierers (8) und mit dem Eingang des monostabilen Multivibrators (9) verbunden ist, dessen Ausgang an den anderen Eingang des Impulssummierers (8) angeschlossen ist, dessen Ausgang einen Ausgang des Impulsformers (7a) bildet.

3. Vorrichtung nach Anspruch 1, dadurch **gekennzeichnet,** daß der Impulsformer (7b) jedes Submoduls aus einem Impulssummierer (8) und zwei monostabilen Multivibratoren (9, 9') besteht, wobei der Eingang des Impulsformers (7b) mit dem einen Eingang des Impulssummierers (8) und mit dem Eingang des ersten monostabilen Multivibrators (9') verbunden ist, dessen Ausgang an den Eingang des zweiten monostabilen Multivibrators (9) angeschlossen ist, dessen Ausgang wiederum mit dem anderen Eingang des Impulssummierers (8) verbunden ist, dessen Ausgang einen Ausgang des Impulsformers (7b) bildet.

4. Vorrichtung nach Anspruch 1, dadurch **gekennzeichnet,** daß die Impulsformer (7', 7'') einiger Submoduln (2', 2'') gemäß Anspruch 1 und die Impulsformer anderer Submoduln gemäß Anspruch 3 ausgebildet sind.

Fig.1

Fig. 4

Fig 5

Fig 2

Fig 3

Europäisches
Patentamt

**EUROPÄISCHER
RECHERCHENBERICHT**

Nummer der Anmeldung

**EP 90 10 5270**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X,A | GB-A-2 043 955   (INSTITUTE PO TECHNITSCHESKA KIBERNETIKA I ROBOTIKA)<br>* Seite 1, Zeile 1 - Seite 3, Zeile 5; Figuren 1, 2 *<br>- - - | 1,2-4 | B 23 K 9/12<br>G 05 D 13/62 |
| Y,A | DE-A-3 827 509   (KUKA SCHWEISSANLAGEN + ROBO-TER)<br>* Spalte 1, Zeile 1 - Spalte 8, Zeile 57; Figuren 2-4 *<br>- - - | 1,2-4 | |
| Y,A | WO-A-9 000 938   (THE PERKIN-ELMER CORP.)<br>* Seite 1, Absatz 1 - Seite 11, letzter Absatz; Figuren 1-5 *<br>- - - | 1,2-4 | |
| A | US-A-3 586 222   (MARVIN ROSEN)<br>* das ganze Dokument *<br>- - - | 1-4 | |
| A | US-A-4 429 820   (ANGELOV ET AL.)<br>* das ganze Dokument *<br>- - - - - | 1-4 | |

| RECHERCHIERTE SACHGEBIETE (Int. Cl.5) |
|---|
| B 23 K<br>G 05 D |

Der vorliegende Recherchenbericht wurde für alle Patentansprüche erstellt

| Recherchenort | Abschlußdatum der Recherche | Prüfer |
|---|---|---|
| Den Haag | 08 November 90 | HERBRETEAU D.J-P.J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument
-------------------------------------------------------------------
& : Mitglied der gleichen Patentfamilie, übereinstimmendes Dokument